# EUROPÄISCHE PATENTSCHRIFT

(11) **EP 1 688 721 B1**
(45) Veröffentlichungstag und Bekanntmachung des Hinweises auf die Patenterteilung: **28.03.2007**
(21) Anmeldenummer: 05290243.4
(22) Anmeldetag: 02.02.2005
(51) Int. Cl.: G01K 3/00

(54) **Verfahren und Vorrichtung zum Bestimmen eines Wendezeitpunktes eines Gargutes**
Method and device for determining the turn-over time of a cooking good
Procédé et dispositif pour déterminer le temps de cuisson auquel un aliment doit être retourné

(43) Veröffentlichungstag der Anmeldung: 09.08.2006
(73) Patentinhaber: FRIMA S.A., 68271 Wittenheim Cedex (FR); Rational AG, 86899 Landsberg/Lech (DE)
(72) Erfinder: Wiedemann, Peter, 86836 Klosterlechfeld (DE); Altenburger, Klaus, 76337 Waldbronn (DE); Podestat, Helen, 79356 Eichstetten (DE)
(74) Vertreter: Weber-Bruls, Dorothée

(56) Entgegenhaltungen:
- DE-A1- 10 062 371
- US-A- 3 373 611
- US-A- 4 230 731
- US-A- 4 447 693
- US-A1- 2003 007 544

## Beschreibung

Die Erfindung betrifft ein Verfahren zum Bestimmen eines Wende-Zeitpunktes zumindest eines Garguts, dem während eines Garprozesses einseitig Wärme zugeführt wird, und ein Gargerät für ein solches Verfahren.

Ein gattungsgemäßes Verfahren ist beispielsweise aus der US 3,373,611 bekannt. Bei diesem bekannten Verfahren kommt ein Steakthermometer zum Einsatz, über das der Wende-Zeitpunkt des Steaks in Abhängigkeit von dem gewünschten Gargrad des Steaks durch Erfassung im wesentlichen der Kerntemperatur des Steaks anzeigbar ist. Mit anderen Worten wird der Wende-Zeitpunkt einzig durch die Kerntemperatur für einen gewünschten Gargrad bestimmt.

Aus der WO 03/031876 A1 ist ein Gargerät bekannt, das einen Temperatursensor, einen Prozessor und eine Ausgabeeinheit aufweist. Über die Ausgabeeinheit können beispielsweise dem Benutzer des Gargeräts akustische oder visuelle Instruktionen gegeben werden, insbesondere zum Wenden, Drehen, Rollen, Rühren, Mischen oder Trennen eines Garguts, und zwar in Abhängigkeit von einer über den Temperatursensor gemessenen Temperatur, einer Zeitperiode oder einer angelegten Wärmemenge.

In der WO 01/70087 A2 sind ein Verfahren und eine Vorrichtung zum automatischen Garen beschrieben, bei denen über eine Kerntemperatur der Garzustand eines Garguts ermittelt wird. Insbesondere kann bei der Vorrichtung der WO 01/70087 A2 ein Indikator vorhanden sein, der andeutet, wann eine Kerntemperatur des Garguts eine vorbestimmte Temperatur erreicht hat. Ferner weist die Vorrichtung eine Einrichtung zum Drehen des Garguts auf.

Die DE 299 23 215 U1 offenbart einen Temperaturfühler mit mehreren Temperatursensoren, die Temperaturen in und an einem Gargut fühlen können. Dabei kann über den zeitlichen Verlauf der an den Temperatursensoren gemessenen Temperaturen eine Kerntemperatur ermittelt werden. Diese Kerntemperatur kann unter anderem zur Bestimmung eines Gargutquerschnitts oder dergleichen herangezogen werden.

Aus der US 4,230,731 ist ein Mikrowellengarverfahren bekannt, bei dem über einen Temperaturfühler eine Garguttemperatur während eines Garvorganges gemessen wird, wobei der Garvorgang zu bestimmten Zeiten unterbrochen wird, um einen Temperaturausgleich im Gargut zu ermöglichen, so daß im Folgenden Garschritt die im Gargut tatsächlich herrschende Garguttemperatur zur Garprozeßsteuerung herangezogen werden kann.

In der US 4,447,693 ist ein leistungsgesteuerter Mikrowellenofen beschrieben, bei dem eine mittlere Garguttemperatur beispielsweise als Funktion einer Garzeit unter Berücksichtigung eingegebener Gargutdaten, gespeicherter Garkoeffizienten vorangegangener Analysen sowie gemessener Magnetroneingabeleistungen ermittelt wird, um durch Steuerung der Leistung eines Magnetrons einen gewünschten Gargrad zum Endzeitpunkt des Garverfahrens zu erhalten.

Die US 2003/0007544 offenbart ein duales Thermometersystem, über das sowohl eine Garguttemperatur als auch eine Garraumtemperatur erfaßbar und anzeigbar sind, wobei bei Erreichen bestimmter Soll-Werte ein Alarmsignal ausgebbar ist.

Des weiteren ist aus der DE 100 62 371 A1 ein Grillspieß mit einem Hohlraum, in welchem mindestens ein Temperatur-Meßfühler mit einer Spießstange mitdrehend angeordnet ist, bekannt.

Diese bekannten Gargeräte weisen den Nachteil auf, daß ein Wende-Zeitpunkt eines Garguts nicht korrekt automatisch erkannt wird, so daß eine gleichmäßige Bräunung eines Garguts, wenn über Kontakthitze von nur einer Seite her dem Gargut Wärme zugeführt wird, nicht wiederholt in gewünschtem Umfang realisiert wird. Insbesondere wird in dem Gargerät der WO 03/031876 A1 nicht die Form und/oder die Dicke des in das Gargerät eingebrachten Garguts berücksichtigt, so daß bei der Programmierung eines solchen Gargeräts nur von einer gemittelten Gargutgröße und/oder Gargutdicke ausgegangen wird. Folglich kann ein zu langes Garen eines nicht normierten, d.h. einer mittleren Größe entsprechenden, Garguts auf nur einer Seite zu einem völlig ungenießbaren Ergebnis und/oder zu einer unterschiedlichen Bräunung auf beiden Seiten des Garguts führen, was schließlich zu einem unzufriedenen Kunden und/oder zu einem erhöhten finanziellen Aufwand aufgrund eines erneuten Garversuchs führt. Um dies zu vermeiden, ist ein Bediener besagten Gargeräts bislang gezwungen, sich ständig in der Nähe des Gargeräts aufzuhalten, um aufgrund seiner Erfahrung zu dem richtigen Zeitpunkt das Gargut zu wenden. Dies ist ebenfalls kostenaufwendig.

Aufgabe der Erfindung ist es daher, das gattungsgemäße Verfahren zum Bestimmen des Wende-Zeitpunktes eines Garguts derart weiterzuentwickeln, daß es die Nachteile des Stands der Technik überwindet, insbesondere bei Erreichen einer gewünschten Soll-Temperatur des Garguts auf beiden Seiten des Garguts eine gleichmäßige Bräunung sicherstellt.

Diese Aufgabe wird erfindungsgemäß durch ein Verfahren mit folgenden Schritte gelöst:
a) Bestimmen einer ersten Temperatur T_{A} in dem Gargut zu Beginn des Garprozesses an einem Anfangs-Zeitpunkt t_{A} sowie einer Soll-Temperatur T_{E} des Garguts, die am Ende des Garprozesses zum End-Zeitpunkt t_{E} vorliegen soll;
b) Ermitteln einer ersten Temperaturdifferenz zwischen der Soll-Temperatur T_{Soll} und der ersten Temperatur T_{A};
c) Bestimmen zumindest einer Ist-Temperatur Tᵢₛₜ in dem Gargut zu mehreren Zeitpunkten während des Garprozesses;
d) Ermitteln des Wende-Zeitpunktes t_{W} als den Zeitpunkt, an dem eine zweite Temperaturdifferenz zwischen der Soll-Temperatur T_{Soll} und der Ist-Temperatur Tᵢₛₜ einen bestimmten Anteil der ersten Temperaturdifferenz erreicht; und Ausgeben eines Signals bei Erreichen des Wende-Zeitpunktes t_{W}.

Dabei kann vorgesehen sein, daß zumindest während des Schritts c) dem Gargut über Kontakthitze, vorzugsweise über einen Tiegelboden, einseitig Wärme zugeführt wird.

Ferner wird erfindungsgemäß vorgeschlagen, daß der Anteil der zweiten Temperaturdifferenz zum Wende-Zeitpunkt t_{W}, also (T_{Soll} - T_{W}) mit T_{W} = Wende-Temperatur, ausgewählt wird aus einem Bereich von 30% bis 70% der ersten Temperaturdifferenz (T_{Soll} - T_{A}), insbesondere in Abhängigkeit von dem Gargut, bestimmt vorzugsweise von dem Garguttyp, der Gargutdicke, der Gargutform und/oder dem Gargutkaliber.

Bevorzugt ist dabei, daß die erste Temperatur T_{A} und/oder die Ist-Temperatur Tᵢₛₜ unter Einsatz zumindest eines Temperaturfühlers, insbesondere eines Kerntemperaturfühlers, der in das Gargut zumindest teilweise eingebracht wird, und/oder eines berührungslosen Meßverfahrens, insbesondere mittels Infrarotsensoren, bestimmt wird.

Ferner kann erfindungsgemäß vorgesehen sein, daß die erste Temperatur T_{A} nach Einstechen des Temperaturfühlers in das Gargut, nach Einbringen des Garguts in ein Gargerät und/oder vor Zuführen von Wärme zu dem Gargut gemessen oder von einem Bediener, insbesondere über eine Eingabevorrichtung, eingegeben oder aus einer Speichervorrichtung abgefragt wird.

Weiterhin wird erfindungsgemäß vorgeschlagen, daß die Soll-Temperatur T_{Soll} durch einen Bediener, insbesondere über eine Eingabevorrichtung, eingegeben wird, oder die Soll-Temperatur T_{Soll} aus einer Speichervorrichtung abgefragt wird.

Erfindungsgemäß kann auch vorgesehen sein, daß als die Soll-Temperatur T_{Soll} die End-Kerntemperatur des Garguts zum End-Zeitpunkt t_{E} ausgewählt wird, und/oder als die Ist-Temperatur Tᵢₛₜ die Ist-Kerntemperatur des Garguts zu jedem Zeitpunkt ausgewählt wird, und/oder als die erste Temperatur T_{A} die Anfangs-Kerntemperatur des Garguts zum Anfangs-Zeitpunkt t_{A} ausgewählt wird.

Ferner kann vorgesehen sein, daß die Ist-Temperatur Tᵢₛₜ und/oder die Anfangs-Temperatur T_{A} über einen Temperaturfühler mit einer Vielzahl von Meßpunkten entlang einer in das Gargut zumindest teilweise entsteckbaren Spitze bestimmt wird bzw. werden, insbesondere über eine Auswertung der an den Meßpunkten erfaßten Temperaturen als Funktion der Zeit.

Dabei wird mit der Erfindung vorgeschlagen, daß erste Meßpunkte, an denen ab dem Anfangs-Zeitpunkt t_{A} sich ändernden Meßwerte erfaßt werden, als im Gargut angeordnete Meßpunkte betrachtet und zur Bestimmung der Ist-Temperatur Tᵢₛₜ und/oder der Anfangs-Temperatur t_{A} herangezogen werden, und/oder zweite Meßpunkte, an denen ab dem Anfangs-Zeitpunkt T_{A} sich über die Zeit im wesentlichen nicht ändernde Meßwerte erfaßt werden, als außerhalb des Garguts angeordnete Meßpunkte betrachtet werden.

Auch kann vorgesehen sein, daß über die Anstiegsgeschwindigkeit der Ist-Temperatur Tᵢₛₜ in dem Gargut, insbesondere in Abhängigkeit von der über zumindest eine Heizvorrichtung dem Gargut einseitig zugeführten Wärme, vorzugsweise bestimmt durch eine Tiegelbodentemperatur, das Kaliber, die Dicke und/oder die Form des Garguts ermittelt wird bzw. werden.

Mit der Erfindung wird ferner vorgeschlagen, daß das Signal als ein für einen Bediener optisches, akustisches und/oder ein fühlbares Signal ausgegeben wird.

Auch kann vorgesehen sein, daß das Signal von zumindest einer Wendevorrichtung empfangen wird, insbesondere in Form eines optischen, elektrischen und/oder elektromagnetischen Signals, und die Wendevorrichtung das Gargut wendet.

Mit der Erfindung wird auch ein Gargerät zum Durchführen eines erfindungsgemäßen Verfahrens geliefert, umfassend zumindest eine Steuer- und/oder Regeleinrichtung und zumindest eine Heizeinrichtung und/oder zumindest eine Temperaturmeßeinrichtung und/oder zumindest eine Signaleinrichtung.

Dabei kann vorgesehen sein, daß das Gargerät einen Tiegel, insbesondere einen offenen Tiegel, umfaßt, in den zumindest ein Gargut einbringbar ist.

Ferner wird mit der Erfindung vorgeschlagen, daß Hitze dem Gargut über einen von der Heizeinrichtung mit Wärme beaufschlagten Tiegelboden einseitig zuführbar ist, wobei die Heizeinrichtung vorzugsweise zumindest ein Heizelement, zumindest ein Mittel zur induktiven Heizung, zumindest einen Heizwiderstand, zumindest eine Mikrowellenheizeinrichtung und/oder zumindest eine Gasheizeinrichtung umfaßt.

Erfindungsgemäß kann ferner vorgesehen sein, daß die Temperaturmeßeinrichtung einen Kerntemperaturfühler mit einer Vielzahl von Meßsensoren längs seiner in das Gargut zumindest teilweise einführbaren Spitze und/oder zumindest einen Temperatursensor im Bereich des Tiegelbodens, vorzugsweise isoliert von der Heizeinrichtung, umfaßt.

Erfindungsgemäße Gargeräte können gekennzeichnet sein, durch zumindest eine Wendevorrichtung für das Gargut.

Der Erfindung liegt somit die überraschende Erkenntnis zugrunde, daß es nach Ermitteln einer ersten Temperaturdifferenz zwischen einer Soll-Temperatur eines Garguts, vorzugsweise der gewünschten End-Kerntemperatur desselben, und einer ersten Temperatur am Anfang eines Garprozesses im Gargut, insbesondere in Form einer direkt nach Einstechen eines Temperaturfühlers in das Gargut und/oder Einbringen des Garguts in ein Gargerät gemessenen ersten Temperatur und/oder einer, insbesondere von einem Bediener vorgegebenen, bestimmten ersten Temperatur, wenn das Gargut beispielsweise aus einem (Tief-)Kühlfach direkt entnommen wird, dann sichergestellt ist, daß ein Bediener oder eine Wendevorrichtung das Gargut derart rechtzeitig wendet, ohne daß der Bediener die komplette Garzeit das Gargut überwacht, wodurch gleichzeitig mit dem Erreichen der Soll-Temperatur auch auf beiden Seiten des Garguts eine gleichmäßige Bräunung erreicht wird, indem ein Wende-Signal ausgegeben wird, wenn eine zweite Temperaturdifferenz zwischen der Soll-Temperatur und einer im Gargut als Funktion der Zeit gemessenen Temperatur einen bestimmten Wert zwischen 30 % bis 70 % der zu überwindenden ersten Temperaturdifferenz erreicht. Der genaue Anteil hängt vom Gargut ab und beträgt z.B. 50% bei einem Steak.

Das erfindungsgemäße Verfahren zum Bestimmen eines Wende-Zeitpunktes eines Garguts hat zur Folge, daß die Bedienung des Gargeräts nicht nur vereinfacht wird, sondern auch der Bediener des Gargeräts nicht ständig den Garprozeß überwachen muß. Ferner ist es durch das erfindungsgemäße Garverfahren und das erfindungsgemäße Gargerät möglich, auch ungelernte Personen, die keine längere Erfahrung im Schätzen von Wende-Zeitpunkten aufweisen, zur Bedienung zuzulassen. Dadurch läßt sich der Garbetrieb sehr viel besser optimieren und ungenießbare Garergebnisse vollständig vermeiden, was folglich zu einer geringeren Menge von Gargut führt, das schon vor dem Konsum entsorgt werden muß, und somit zu einer erheblichen Kosteneinsparung führt.

Weitere Merkmale und Vorteile der Erfindung ergeben sich aus der nachstehenden Beschreibung, in der ein Ausführungsbeispiel der Erfindung anhand von schematischen Zeichnungen im Einzelnen erläutert wird. Dabei zeigt:
Fig. 1: ein erfindungsgemäßes Gargerät, und
Fig. 2: ein Zeit-Temperatur-Diagramm eines Temperaturverlaufs in einem in einem Gargerät gemäß Fig. 1 gegart werdenden Gargut.

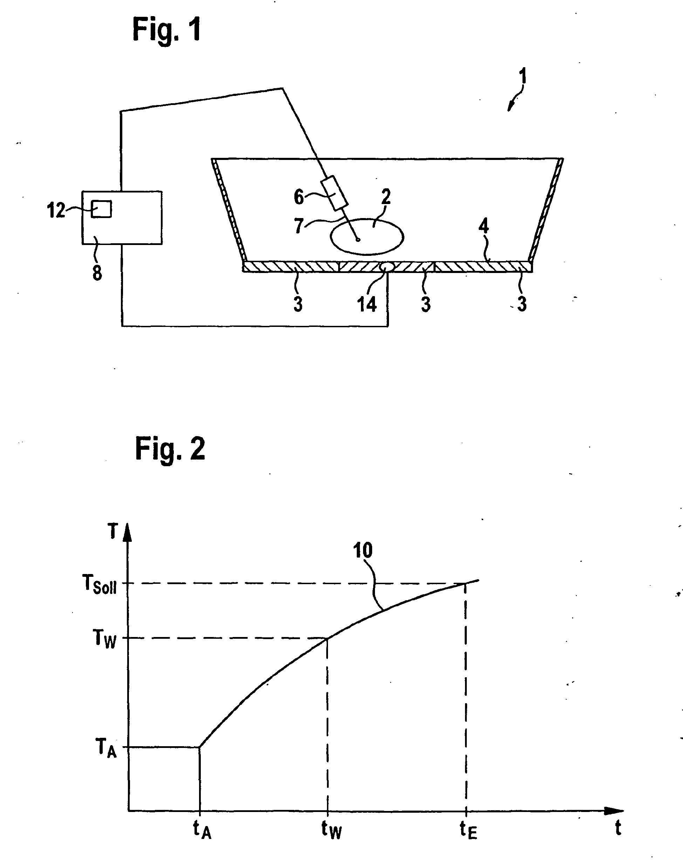

Wird in einem erfindungsgemäßen Gargerät in Form eines offenen Gartiegels 1, wie er der Fig. 1 entnommen werden kann, einem Lebensmittel bzw. einem Gargut 2 über Kontakthitze von nur einer Seite her Wärme, beispielsweise über Heizelemente 3, die an einem Boden 4 des Gartiegels 1 angeordnet sind, zugeführt, so kann mit Hilfe eines im Bereich seiner Spitze 7 in das Gargut 2 zumindest teilweise eingeführten Kerntemperaturfühlers 6, der in Verbindung mit einer Steuer- und/oder Regeleinheit 8 steht, der Zeitpunkt t_{W} bestimmt werden, an welchem das Gargut 2 gewendet werden muß, um gleichzeitig mit Erreichen einer gewünschten Soll-Kerntemperatur T_{Soll} in dem Gargut 2 auch auf beiden Seiten desselben eine gleichmäßige Bräunung zu erreichen. In der Fig. 2 ist ein Zeit-Temperatur-Diagramm mit einer Zeitachse (t-Achse) und einer Temperatur-Achse (T-Achse) dargestellt. Mit einer durchgehenden Linie 10 ist dabei eine über den Kerntemperaturfühler 6 erfaßte Ist-Temperatur Tᵢₛₜ des Garguts 2 angedeutet. Zur Erreichung der gleichmäßigen Bräunung auf beiden Seiten des Garguts 2 wird zuerst eine erste Temperaturdifferenz zwischen einer beispielsweise von einem Bediener des Gartiegels 1 eingestellten Soll-Temperatur T_{Soll}, die am Ende eines Garprozesses, also zum End-Zeitpunkt t_{E} als gewünschte Soll-Kerntemperatur vorliegen soll, und einer am Anfang eines Garprozesses, also zum Anfangs-Zeitpunkt T_{A}, unmittelbar nach dem Stechen bzw. dem Einstecken des Kerntemperaturfühlers 6 in das Gargut gemessenen Anfangs-Temperatur T_{A}, wie in Form der Anfangs-Kerntemperatur, die die tiefste Temperatur während des Garprozesses darstellt, also (T_{Soll} - T_{A}) ermittelt. Während der Wärmezufuhr über die Heizelemente 3 steigt die Ist-Temperatur 10 insbesondere in Form der Ist-Kerntemperatur Tᵢₛₜ im Gargut 2 im Laufe des Garprozesses an. Wenn die Ist-Temperatur Tᵢₛₜ 10, je nach Gargut 2, derart angestiegen ist, daß die Temperaturdifferenz T_{Soll} - Tᵢₛₜ einen Wert zwischen 30% bis 70%, beispielsweise 50%, der zu überwindenden ersten Temperaturdifferenz erreicht, liegt die sogenannte Wende-Temperatur T_{W} im Gargut 2 zum Wende-Zeitpunkt t_{w} vor. Wenn also beispielsweise (T_{Soll} - T_{W})= 40% (T_{Soll}-T_{A}), wird einem Bediener durch ein Signal, insbesondere mittels einer Signaleinrichtung 12, angezeigt, daß er das sich in dem Gartiegel 1 befindliche Gargut 2 wenden muß. Nach dem Wenden des Garguts 2, also ab dem Wende-Zeitpunkt t_{W}, wird der Garprozeß bis zum Erreichen der gewünschten Soll-Temperatur T_{Soll} fortgesetzt, die zum End-Zeitpunkt t_{E} erreicht wird.

Zusätzlich kann über eine Auswertung der Anstiegsgeschwindigkeit der Ist-Temperatur 10 im Gargut 2, also der Kerntemperatur im Gargut 2 im Verlauf des Garprozesses, in der Regel- und/oder Steuereinrichtung 8 insbesondere in Abhängigkeit von der Tiegelbodentemperatur, die über einen an dem Boden 4 angeordneten Temperatursensor 14, der in Verbindung mit der Steuer- und/oder Regeleinheit 8 steht, die Dicke des Garguts 2 ermittelt werden.

Beispielsweise kann bei der Ermittlung der Kerntemperatur des Garguts 2 über den Kemtemperaturfiihler 6, der eine Vielzahl von Meßpunkten längs seiner Spitze 7 aufweist, berücksichtigt werden, daß die Umgebungstemperatur des Garguts 2 nur eine geringfügige Temperaturveränderung bei einem Garverprozeß in einem offenen oder geschlossenen Tiegel 1 mit einer Temperaturzuführung über Kontakthitze, wie über die Heizelemente 3, erfährt. Wird also unmittelbar nach dem Stechen des Kerntemperaturfühlers 6 in das Gargut 2 über eine Auswertung der Ausgabewerte an den Meßpunkten des Kerntemperaturfühlers 6 eine schnelle Temperaturveränderung an ersten Meßpunkten durch die Steuer- und/oder Regeleinheit 8 festgestellt, so werden nur deren Ausgabewerte zur Bestimmung der Kerntemperatur herangezogen, während die Temperaturen an den restlichen zweiten Meßpunkten als außerhalb des Garguts 2 liegend, sich nicht oder nur langsam verändernd, erkannt werden. Befinden sich beispielsweise drei nahe beieinander liegende, also benachbarte Meßpunkte der Kerntemperaturfühlers 6 in dem Gargut 2 und liegt der Temperaturunterschied zwischen einem ersten Meßpunkt zu einem dazu benachbarten zweiten Meßpunkt sowie zwischen dem zweiten Meßpunkt und einem wiederum dazu benachbarten dritten Meßpunkt oberhalb einer definierten dritten Temperaturdifferenz, so wird daraus geschlossen, daß sich alle drei Meßpunkte im Gargut 2 befinden. Der kälteste Punkt im Gargut 2, also die Kerntemperatur des Garguts 2, kann dann über eine Mathematische Formel unter Berücksichtigung des zeitlichen Verlaufs der Temperatur an den Meßpunkten und somit der Qualität der Stechung, d. h. dem Abstand der Meßpunkte im Gargut 2 vom Kern des Garguts 2 ermittelt werden. Die Kerntemperatur wird schließlich z.B. zur Bestimmung des Endgarzustands, bei dem die der End-Kerntemperatur der Soll-Kerntemperatur entspricht, herangezogen.

Statt dem hiervor beschriebenen Kerntemperaturfühler 6 kann natürlich auch ein berührungsloses Verfahren, beispielsweise über Infrarotsensoren, zur Messung bzw. Ermittlung von T_{A} und/oder Tᵢₛₜ herangezogen werden.

Die in der vorstehenden Beschreibung, den Zeichnungen und den Ansprüchen offenbarten Merkmale der Erfindung können sowohl einzeln als auch in jeder beliebigen Kombination für die Verwirklichung der Erfindung in ihren verschiedenen Ausführungen wesentlich sein.

## Patentansprüche

1. Verfahren zum Bestimmen eines Wende-Zeitpunktes zumindest eines Garguts, dem während eines Garprozesses einseitig Wärme zugeführt wird, **gekennzeichnet durch** die folgenden Schritte:
a) Bestimmen einer ersten Temperatur T_{A} in dem Gargut zu Beginn des Garprozesses an einem Anfangs-Zeitpunkt t_{A} sowie einer Soll- Temperatur T_{Soll} des Garguts, die am Ende des Garprozesses zum End-Zeitpunkt t_{E} vorliegen soll;
b) Ermitteln einer ersten Temperaturdifferenz zwischen der Soll-Temperatur T_{Soll} und der ersten Temperatur T_{A};
c) Bestimmen zumindest einer Ist-Temperatur Tᵢₛₜ in dem Gargut zu mehreren Zeitpunkten während des Garprozesses;
d) Ermitteln des Wende-Zeitpunktes t_{W} als den Zeitpunkt, an dem eine zweite Temperaturdifferenz zwischen der Soll-Temperatur T_{Soll} und der Ist-Temperatur Tᵢₛₜ einen bestimmten Anteil der ersten Temperaturdifferenz erreicht; und
e) Ausgeben eines Signals bei Erreichen des Wende-Zeitpunktes t_{W}.

2. Verfahren nach Anspruch 1, **dadurch gekennzeichnet, daß**
zumindest während des Schritts c) dem Gargut über Kontakthitze, vorzugsweise über einen Tiegelboden, einseitig Wärme zugeführt wird.

3. Verfahren nach Anspruch 1 oder 2, **dadurch gekennzeichnet, daß**
der Anteil der zweiten Temperaturdifferenz zum Wende-Zeitpunkt t_{W}, also (T_{Soll} - T_{W}) mit T_{W} = Wende-Temperatur, ausgewählt wird aus einem Bereich von 30% bis 70% der ersten Temperaturdifferenz (T_{Soll} - T_{A}), insbesondere in Abhängigkeit von dem Gargut, bestimmt vorzugsweise von dem Garguttyp, der Gargutdicke, der Gargutform und/oder dem Gargutkaliber.

4. Verfahren nach einem der vorangehenden Ansprüche, **dadurch gekennzeichnet, daß** die erste Temperatur T_{A} und/oder die Ist-Temperatur Tᵢₛₜ unter Einsatz zumindest eines Temperaturfühlers, insbesondere eines Kerntemperaturfühlers, der in das Gargut zumindest teilweise eingebracht wird, und/oder eines berührungslosen Meßverfahrens, insbesondere mittels Infrarotsensoren, bestimmt wird.

5. Verfahren nach einem der vorangehenden Ansprüche, **dadurch gekennzeichnet, daß** die erste Temperatur T_{A} nach Einstechen des Temperaturfühlers in das Gargut, nach Einbringen des Garguts in ein Gargerät und/oder vor Zuführen von Wärme zu dem Gargut gemessen oder von einem Bediener, insbesondere über eine Eingabevorrichtung, eingegeben oder aus einer Speichervorrichtung abgefragt wird.

6. Verfahren nach einem der vorangehenden Ansprüche, **dadurch gekennzeichnet, daß** die Soll-Temperatur T_{Soll} durch einen Bediener, insbesondere über eine Eingabevorrichtung, eingegeben, oder aus einer Speichervorrichtung abgefragt wird.

7. Verfahren nach einem der vorangehenden Ansprüche, **dadurch gekennzeichnet, daß** als die Soll-Temperatur T_{Soll} die End-Kerntemperatur des Garguts zum End-Zeitpunkt t_{E} ausgewählt wird, und/oder als die Ist-Temperatur Tᵢₛₜ die Ist-Kerntemperatur des Garguts zu jedem Zeitpunkt ausgewählt wird, und/oder als die erste Temperatur T_{A} die Anfangs-Kerntemperatur des Garguts zum Anfangs-Zeitpunkt t_{A} ausgewählt wird.

8. Verfahren nach einem der vorangehenden Ansprüche, **dadurch gekennzeichnet, daß** die Ist-Temperatur Tᵢₛₜ und/oder die Anfangs-Temperatur T_{A} über einen Temperaturfühler mit einer Vielzahl von Meßpunkten entlang einer in das Gargut zumindest teilweise entsteckbaren Spitze bestimmt wird bzw. werden, insbesondere über eine Auswertung der an den Meßpunkten erfaßten Temperaturen als Funktion der Zeit.

9. Verfahren nach Anspruch 8, **dadurch gekennzeichnet, daß**
erste Meßpunkte, an denen ab dem Anfangs-Zeitpunkt t_{A} sich ändernden Meßwerte erfaßt werden, als im Gargut angeordnete Meßpunkte betrachtet und zur Bestimmung der Ist-Temperatur Tᵢₛₜ und/oder der Anfangs-Temperatur t_{A} herangezogen werden, und/oder zweite Meßpunkte, an denen ab dem Anfangs-Zeitpunkt T_{A} sich über die Zeit im wesentlichen nicht ändernde Meßwerte erfaßt werden, als außerhalb des Garguts angeordnete Meßpunkte betrachtet werden.

10. Verfahren nach einem der vorangehenden Ansprüche, **dadurch gekennzeichnet, daß** über die Anstiegsgeschwindigkeit der Ist-Temperatur Tᵢₛₜ in dem Gargut, insbesondere in Abhängigkeit von der über zumindest eine Heizvorrichtung dem Gargut einseitig zugeführten Wärme, vorzugsweise bestimmt durch eine Tiegelbodentemperatur, das Kaliber, die Dicke und/oder die Form des Garguts ermittelt wird bzw. werden.

11. Verfahren nach einem der vorangehenden Ansprüche, **dadurch gekennzeichnet, daß** das Signal als ein für einen Bediener optisches, akustisches und/oder ein fühlbares Signal ausgegeben wird.

12. Verfahren nach einem der vorangehenden Ansprüche, **dadurch gekennzeichnet, daß** das Signal von zumindest einer Wendevorrichtung empfangen wird, insbesondere in Form eines optischen, elektrischen und/oder elektromagnetischen Signals, und die Wendevorrichtung das Gargut wendet.

13. Gargerät (1) zum Durchführen eines Verfahrens nach einem der vorangehenden Ansprüche, umfassend zumindest eine Steuer- und/oder Regeleinrichtung (8) und zumindest eine Heizeinrichtung (3) und/oder zumindest eine Temperaturmeßeinrichtung (6, 14) und/oder zumindest eine Signaleinrichtung (12).

14. Gargerät (1) nach Anspruch 13, **dadurch gekennzeichnet, daß**
das Gargerät einen Tiegel (1), insbesondere einen offenen Tiegel, umfaßt, in den zumindest ein Gargut (2) einbringbar ist.

15. Gargerät (1) nach Anspruch 14, **dadurch gekennzeichnet, daß**
Hitze dem Gargut (2) über einen von der Heizeinrichtung (3) mit Wärme beaufschlagten Tiegelboden (4) einseitig zuführbar ist, wobei die Heizeinrichtung (3) vorzugsweise zumindest ein Heizelement (3), zumindest ein Mittel zur induktiven Heizung, zumindest einen Heizwiderstand, zumindest eine Mikrowellenheizeinrichtung und/oder zumindest eine Gasheizeinrichtung umfaßt.

16. Gargerät (1) nach einem der Ansprüche 13 bis 15, **dadurch gekennzeichnet, daß**
die Temperaturmeßeinrichtung einen Kerntemperaturfühler (6) mit einer Vielzahl von Meßsensoren längs seiner in das Gargut (2) zumindest teilweise einführbaren Spitze (7) und/oder zumindest einen Temperatursensor (14) im Bereich des Tiegelbodens (4), vorzugsweise isoliert von der Heizeinrichtung (3), umfaßt.

17. Gargerät (1) nach einem der Ansprüche 13 bis 16, **gekennzeichnet durch** zumindest eine Wendevorrichtung für das Gargut (2).

## Claims

1. Method for determining a turning time for at least one product being cooked, one side of which is supplied with heat during a cooking process, **characterized by** the following steps:
a) determining a first temperature T_{A} in the product being cooked at the beginning of the cooking process at a start time t_{A} and determining a setpoint temperature Tₛₑₜ of the product being cooked which should prevail at the end of the cooking process at the end time t_{E};
b) ascertaining a first temperature difference between the setpoint temperature Tₛₑₜ and the first temperature T_{A};
c) determining at least one actual temperature Tact in the product being cooked at several times during the cooking process;
d) ascertaining the turning time t_{W} as the time at which a second temperature difference between the setpoint temperature Tₛₑₜ and the actual temperature Tact reaches a specific proportion of the first temperature difference; and
e) outputting a signal when the turning time t_{W} is reached.

2. Method according to Claim 1, **characterized in that** heat is supplied to one side of the product being cooked by means of contact heat, preferably via a pan base, at least during step c).

3. Method according to Claim 1 or 2, **characterized in that** the proportion of the second temperature difference at the turning time t_{W}, that is to say (Tₛₑₜ - T_{W}) where T_{W} = turning temperature, is selected from a range of from 30% to 70% of the first temperature difference (Tₛₑₜ - T_{A}), in particular as a function of the product being cooked, specifically preferably the type of product being cooked, the thickness of the product being cooked, the shape of the product being cooked and/or the quality of the product being cooked.

4. Method according to one of the preceding claims, **characterized in that** the first temperature T_{A} and/or the actual temperature T_{act} are/is determined using at least one temperature sensor, in particular a core-temperature sensor which is at least partially inserted into the product being cooked, and/or a contactless measuring method, in particular by means of infrared sensors.

5. Method according to one of the preceding claims, **characterized in that** the first temperature T_{A} is measured or entered by an operator, in particular via an input apparatus, or requested from a memory apparatus after the temperature sensor is inserted into the product being cooked, after the product to be cooked is placed in a cooking device and/or before heat is supplied to the product to be cooked.

6. Method according to one of the preceding claims, **characterized in that** the setpoint temperature Tₛₑₜ is entered by an operator, in particular via an input apparatus, or is requested from a memory apparatus.

7. Method according to one of the preceding claims, **characterized in that** the final core temperature of the cooked product at the end time t_{E} is selected as the setpoint temperature Tₛₑₜ, and/or the actual core temperature of the product being cooked at any time is selected as the actual temperature T_{act}, and/or the initial core temperature of the product to be cooked at the start time t_{A} is selected as the first temperature T_{A}.

8. Method according to one of the preceding claims, **characterized in that** the actual temperature Tact and/or the start temperature T_{A} are/is determined by means of a temperature sensor with a large number of measurement points along a tip which can be at least partially inserted into the product being cooked, in particular by evaluating the temperatures detected at the measurement points as a function of time.

9. Method according to Claim 8, **characterized in that** first measurement points, at which measured values which change starting from the start time t_{A} are detected, are considered to be measurement points arranged in the product being cooked and are used to determine the actual temperature Tact and/or the initial temperature t_{A}, and/or second measurement points, at which measured values which do not substantially change over time starting from the start time T_{A} are detected, are considered to be measurement points arranged outside the product being cooked.

10. Method according to one of the preceding claims, **characterized in that** the quality, the thickness and/or the shape of the product being cooked are/is ascertained by means of the rate of increase of the actual temperature T_{act} in the product being cooked, in particular as a function of the heat which is supplied to one side of the product being cooked via at least one heating apparatus, preferably determined by a pan-base temperature.

11. Method according to one of the preceding claims, **characterized in that** the signal is output as a visual, audible and/or tactile signal for an operator.

12. Method according to one of the preceding claims, **characterized in that** the signal is received by at least one turning apparatus, in particular in the form of a visual, electrical and/or electromagnetic signal, and the turning apparatus turns the product being cooked.

13. Cooking device (1) for carrying out a method according to one of the preceding claims, comprising at least one open-loop and/or closed-loop control device (8) and at least one heating device (3) and/or at least one temperature-measuring device (6, 14) and/or at least one signalling device (12).

14. Cooking device (1) according to Claim 13, **characterized in that** the cooking device comprises a pan (1), in particular an open pan, into which at least one product (2) to be cooked can be inserted.

15. Cooking device (1) according to Claim 14, **characterized in that** heat can be supplied to one side of the product (2) being cooked via a pan base (4) which is heated by the heating device (3), with the heating device (3) preferably comprising at least one heating element (3), at least one means for inductive heating, at least one heating resistor, at least one microwave heating device and/or at least one gas heating device.

16. Cooking device (1) according to one of Claims 13 to 15, **characterized in that** the temperature-measuring device comprises a core-temperature sensor (6) with a large number of measurement sensors along its tip (7) which can be at least partially inserted into the product (2) being cooked and/or at least one temperature sensor (14) in the region of the pan base (4), preferably insulated from the heating device (3).

17. Cooking device (1) according to one of Claims 13 to 16, **characterized by** at least one turning apparatus for the product (2) being cooked.

## Revendications

1. Procédé pour déterminer un instant de retournement d'au moins un produit à cuire auquel de la chaleur est apportée unilatéralement pendant un processus de cuisson, **caractérisé par** les étapes consistant à :
a) déterminer une première température T_{A} dans le produit à cuire pour le début du processus de cuisson à un instant d'origine t_{A}, ainsi qu'une température de consigne T_{Soll} du produit à cuire devant être présente à la fin du processus de cuisson à un instant de fin t_{E} ;
b) détecter une première différence de température entre la température de consigne T_{Soll} et la première température T_{A} ;
c) déterminer au moins une des températures effectives Tᵢₛₜ dans le produit à cuire à plusieurs instants pendant le processus de cuisson ;
d) détecter l'instant de retournement t_{w}, défini comme étant l'instant auquel une deuxième différence de température entre la température de consigne T_{Soll} et la température effective Tᵢₛₜ atteint une certaine fraction déterminée de la première différence de température ; et
e) émettre un signal lorsque l'instant de retournement t_{w} est atteint.

2. Procédé selon la revendication 1, **caractérisé en ce que**
de la chaleur est apportée de manière unilatérale au produit à cuire au moins pendant l'étape c) sous forme de chaleur de contact, de préférence par l'intermédiaire d'un fond de casserole.

3. Procédé selon la revendication 1 ou 2, **caractérisé en ce que**
la fraction de la deuxième différence de température à l'instant de retournement t_{w}, c'est-à-dire (Tₛₒₗₗ - T_{w}) avec T_{w} = température de retournement, est choisie dans une plage de 30 % à 70 % de la première différence de température (T_{Soll} - T_{A}), en particulier en fonction du produit à cuire, et définie de manière préférée par le type de produit à cuire, la densité de produit à cuire, la forme de produit à cuire et/ou le calibre de produit à cuire.

4. Procédé selon l'une quelconque des revendications précédentes, **caractérisé en ce que** la première température T_{A} et/ou la température effective Tᵢₛₜ est déterminée par utilisation d'au moins un capteur de température, en particulier un capteur de température centrale, introduit au moins partiellement dans le produit à cuire, et/ou un procédé de mesure sans contact, en particulier au moyen de capteurs infrarouges.

5. Procédé selon l'une quelconque des revendications précédentes, **caractérisé en ce que** la première température T_{A} après plongée du capteur de température dans le produit à cuire, après introduction du produit à cuire dans un appareil de cuisson et/ou avant apport de chaleur au produit à cuire, est mesurée, ou saisie par un utilisateur, en particulier est saisie par l'intermédiaire d'un dispositif de saisie, ou est demandée à un dispositif de mémorisation.

6. Procédé selon l'une quelconque des revendications précédentes, **caractérisé en ce que** la température de consigne T_{Soll} est saisie par un utilisateur, en particulier sur un dispositif de saisie, ou est demandée à un dispositif de mémorisation.

7. Procédé selon l'une quelconque des revendications précédentes, **caractérisé en ce que** la température centrale finale du produit à cuire à l'instant de fin t_{E} est choisie comme étant la température de consigne T_{Soll}, et/ou la température centrale effective du produit à cuire à chaque instant est choisie comme étant la température effective Tᵢₛₜ, et/ou la température centrale initiale du produit à cuire à l'instant d'origine t_{A} est choisie comme étant la première température T_{A}.

8. Procédé selon l'une quelconque des revendications précédentes, **caractérisé en ce que** la température effective Tᵢₛₜ et/ou la température initiale T_{A} est ou sont déterminée(s) par l'intermédiaire d'une sonde thermométrique avec une multiplicité de points de mesure le long d'au moins une pointe pouvant être partiellement enfoncée dans le produit à cuire, en particulier par une interprétation des températures enregistrées aux points de mesure en fonction du temps.

9. Procédé selon la revendication 8, **caractérisé en ce que**
des premiers points de mesure, au niveau desquels des valeurs de mesure se modifiant à partir de l'instant d'origine t_{A} sont enregistrées, sont considérés comme étant des points de mesure disposés dans le produit à cuire, et sont utilisés pour déterminer la température effective Tᵢₛₜ et/ou la température initiale T_{A}, et/ou
des deuxièmes points de mesure, au niveau desquels des valeurs de mesure ne se modifiant essentiellement pas dans le temps à partir de l'instant d'origine t_{A} sont enregistrées, sont considérés comme étant des points de mesure disposés en dehors du produit à cuire.

10. Procédé selon l'une quelconque des revendications précédentes, **caractérisé en ce que** le calibre, l'épaisseur et/ou la forme du produit à cuire est ou sont déterminés par la vitesse d'augmentation de la température effective Tᵢₛₜ dans le produit à cuire, en particulier en fonction de la chaleur apportée unilatéralement au produit à cuire par l'intermédiaire d'au moins un appareil de chauffage, en étant de préférence déterminés grâce à une température de fond de casserole.

11. Procédé selon l'une quelconque des revendications précédentes, **caractérisé en ce que** le signal est émis comme un signal optique, acoustique et/ou un signal sensitif.

12. Procédé selon l'une quelconque des revendications précédentes, **caractérisé en ce que** le signal d'au moins un dispositif de retournement est reçu, en particulier sous la forme d'un signal optique, électrique et/ou électromagnétique, et le dispositif de retournement retourne le produit à cuire.

13. Appareil de cuisson (1) pour mettre en oeuvre un procédé selon l'une quelconque des revendications précédentes, comportant au moins un dispositif de commande et/ou de régulation (8) et au moins un dispositif de chauffage (3) et/ou au moins un dispositif de mesure de température (6, 14), et/ou au moins un dispositif de signalisation (12).

14. Appareil de cuisson (1) selon la revendication 13, **caractérisé en ce que**
l'appareil de cuisson comporte une casserole (1), en particulier une casserole ouverte, dans laquelle au moins un produit à cuire (2) peut être introduit.

15. Appareil de cuisson (1) selon la revendication 14, **caractérisé en ce que**
de la chaleur peut être apportée unilatéralement au produit à cuire (2) par l'intermédiaire d'un fond de casserole (4) soumis à la chaleur de l'installation de chauffage (3), l'installation de chauffage (3) comportant de préférence au moins un élément chauffant (3), au moins des moyens de chauffage par induction, au moins une résistance chauffante, au moins un appareil de chauffage par micro-ondes et/ou au moins un appareil de chauffage au gaz.

16. Appareil de cuisson (1) selon l'une quelconque des revendications 13 à 15, **caractérisé en ce que** le dispositif de mesure de température comporte un capteur de température centrale (6) ayant une multiplicité de capteurs de mesure le long de sa pointe (7) pouvant être au moins partiellement introduite et/ou au moins un capteur de température (14) dans le secteur du fond de casserole (4), de préférence de manière isolée de l'installation de chauffage (3).

17. Appareil de cuisson (1) selon l'une quelconque des revendications 13 à 16, **caractérisé par** au moins un dispositif de retournement du produit à cuire (2).
